Europäisches Patentamt

**European Patent Office**

Office européen des brevets

(11) Publication number: **0 192 075**
**A2**

# EUROPEAN PATENT APPLICATION

(21) Application number: **86100850.6**

(51) Int. Cl.⁴: **C 08 J 5/12**

(22) Date of filing: **23.01.86**

(30) Priority: **23.01.85 US 694179**

(43) Date of publication of application:
**27.08.86 Bulletin 86/35**

(84) Designated Contracting States:
**DE FR GB**

(71) Applicant: **ROCKWELL INTERNATIONAL CORPORATION**
**North American Aircraft Operations 100 N. Sepulveda Boulevard**
**El Segundo, CA 90245(US)**

(72) Inventor: **Kimerly, John C.**

**(deceased)(US)**

(72) Inventor: **Sparling, Ralph C.**
**2029 Las Posas Road**
**Corona California 91720(US)**

(74) Representative: **Wagner, Karl H. et al,**
**WAGNER & GEYER Patentanwälte**
**Gewuerzmuehlstrasse 5 Postfach 246**
**D-8000 München 22(DE)**

(54) **Method of repairing plastic transparencies.**

(57) A process for repairing damaged, that is scratched, surfaces of optically transparent plastic substrates, such as polycarbonate windows or windshields of aircraft, comprises sanding the defects in the damaged surface of the substrate and applying a film of an optical grade transparent plastic material such as an acrylic plastic to the sanded surface of the substrate, by means of a clear liquid adhesive such as a silicone adhesive. Excess liquid adhesive is removed together with any bubbles and the adhesive is cured to bond the plastic film to the transparent substrate. The adhesive is chosen so that the cured adhesive has a refractive index which matches the refractive index of the substrate, thereby rendering the scratches substantially invisible, and providing clear visibility through the resulting substrate and plastic film thereon. As an additional feature of the invention, the protective plastic film can be applied to new, undamaged surfaces of transparent plastic substrates as an easily replaceable outer protective ply.

EP 0 192 075 A2

## BACKGROUND OF THE INVENTION

The present invention relates to repair of damaged transparent plastic substrates, and is particularly concerned with a process for repair of damaged or scratched surfaces of plastic optical transparencies, particularly aircraft plastic transparencies such as windows and windshields.

Plastic transparencies made from synthetic organic polymers are now utilized in transportation vehicles such as trains, buses and airplanes. Such optical transparencies are particularly employed in the aircraft industry in the nature of windshields, cabin windows, and the like, particularly since the weight of the vehicle is a major factor in its fuel economy.

Although transparent plastics have the further advantage of being more resistant to shattering than glass, such plastics have the disadvantage that they become scratched and marred, due to contact with dust, cleaning equipment and weathering. Continuous scratching and marring results in impaired visibility. Aircraft plastic transparencies are particularly subject to being

0192075

easily scratched in service, often requiring replacement.

Attempts have been made to improve the abrasion resistance of optically transparent plastics such as polycarbonate and acrylics, which have been employed in the above applications. However, these have not proved satisfactory in many instances.

U.S. Patent No. 4,251,572 discloses a method for repair of scratches in the coating on a reflective glass window used in commercial buildings, comprising a glass substrate on which a thin transparent film or coating of a metal, metal halide or oxide is deposited to reflect a large portion of the solar rays and control the transmittance of light therethrough. The process comprises the steps of cleaning the damaged film area with a soft cloth, covering the damaged film area with a filler of compatible color, preferably of the same composition as the original film, and coating the covered damaged film area with a transparent protective layer, e.g., an acrylic resin adhesive.

U.S. Patent No. 4,301,193 discloses a process for removing scratches and dirt from plastic sheeting, windows and windshields, comprising the steps of applying to the scratched surface of the plastic a formulation consisting of a mild abrasive such as kaolinite in a non-volatile vehicle such as diethylene glycol, using a brush or coating device, polishing the plastic surface containing the coating of the above formulation, applying to the polished surface as by spraying, a water emulsion or solvent solution of a silicone, e.g., dimethyl silicone fluid, and wiping the surface dry to remove residual dirt and polish and leave behind a silicone layer on the polished surface of the plastic, which fills the microscopic imperfections in the polished plastic surface and provides a film that resists re-scratching.

U.S. Patents 4,315,046 and 4,401,718 further illustrate the state of the art with respect to methods for treating scratched plastic substrates.

It is accordingly one object of the present invention to remove scratches and defects from plastic transparencies.

Another object is to provide a method for repair of scratches and defects in optically transparent windows, particularly aircraft windshields and windows.

A still further object is to provide procedure of the above type for economically repairing scratched optically transparent windows and windshields, particularly of aircraft, rapidly and economically.

Yet another object is to provide procedure for applying a protective film on optically transparent plastic substrates or windows to prevent damage to such substrates in service, and which is readily replaceable when damaged.

SUMMARY OF THE INVENTION

The above objects and advantages are achieved according to a major aspect of the invention, by the provision of a method for repairing damaged surfaces

- 5 -

0192075

of a transparent plastic substrate, which comprises
sanding the defects in the damaged surface
of the substrate,
bonding a film of a transparent plastic
material to the sanded surface of the substrate, by
means of a clear liquid compatible adhesive, and
curing the adhesive, the refractive index of
the cured adhesive matching the refractive index of
the substrate, whereby the defects are rendered substantially invisible.

More particularly, plastic transparencies,
e.g., windows of an aircraft, such as an acrylic transparency, and which have been scratched in service, can
be repaired according to the present invention as follows.
The damaged surface of the optical transparency is first
abraded with fine sandpaper.  A thin film of an optical
grade plastic, such as cellulos triacetate, is bonded
to the sanded surface of the substrate using a liquid
adhesive such as an acrylic adhesive, while removing all
bubbles and all excess liquid adhesive from the bonding
liquid.

The liquid adhesive between the transparent substrate surface and the plastic film is cured, usually at ambient temperature, for a suitable period of time. After curing, the scratches and sanding marks are rendered invisible, and there is clear visibility through the assembly of the transparent substrate and the bonded protective plastic film, substantially the same as for the initial undamaged substrate.

The adhesive is chosen so that upon cure, the refractive index of the adhesive and the substrate are matched, thus "washing out" or removing any appearance of the defects initially present in the damaged surface of the substrate. Particularly, both the cured adhesive and the plastic film are chosen to have substantially the same refractive index and matching the refractive index of the transparent substrate whose surface is to be repaired.

By proper selection of adhesive, if the plastic protective film becomes damaged in service, it can be removed and replaced.

As an additional feature of the invention, the protective plastic film can be applied to new, undamaged surfaces of transparent plastic substrates as an easily replaceable outer protective ply, by the process described above, but omitting the initial sanding operation.

The process of the present invention can be very quickly carried out and is particularly adapted for field repair of optically transparent damaged or scratched windows and windshields of aircraft.

These and other objects and features of the invention will become apparent from the following detailed description of the invention.

DETAILED DESCRIPTION OF INVENTION
AND PREFERRED EMBODIMENTS

The substrates which are treated according to the invention process are optical plastic transparencies, particularly those employed in windows and windshields of aircraft.  Commercially available plastics or resins widely utilized for this purpose are polycarbonate such as that known as Lexan, marketed by General Electric Co., and acrylics, such as polymethylmethacrylates, marketed as Plexiglas, by Rohm & Haas Co.  In addition to having good optical transparency, these commercially available materials are tough and have high impact strength.  Nevertheless, during service, the surfaces of these plastic substrates mar and scratch due to contact with abrasives, such as dust, cleaning equipment and weathering.  Such continuous scratching and marring reduces visibility and impairs aesthetic appearance.

In accordance with the invention process for repairing the damaged surfaces of such plastic transparencies, the damaged surface of the transparent substrate is initially subjected to scuff sanding using fine sandpaper such as 600 grit sandpaper, to evenly abrade the damaged, e.g., scratched surface.  It is not required to further polish the transparency.

A thin film of an optical grade transparent plastic such as polyester, acrylic, cellulose triacetate or polyvinylfluoride then has applied to one surface thereof a liquid adhesive. The plastic film is chosen to have a matching index of refraction with the optical plastic transparency or substrate whose surface is to be repaired or protected.

The plastic films employed generally have a thickness ranging from about 1 to about 10 mils, preferably about 3 to about 5 mils. However, the thickness of the plastic film employed can vary depending on the specific optical transparency to be coated with the film.

A water clear degassed liquid adhesive such as a liquid silicone, polyurethane or acrylic adhesive is preferably employed in the invention process. The latter specific adhesives, particularly silicone, are all high temperature resistant, to temperature up to about 300°F. and above, and also have good low temperature resistance, the acrylic adhesives particularly having good low temperature characteristics down to about -90°F.

0192075

The above water clear liquid adhesives are preferably degassed prior to application to the above plastic film. This can be accomplished by placing the liquid adhesive in a vacuum container or jar subjected to a vacuum, e.g., of the order of about 29 inches mercury, for a suitable period, for example, about two hours. The resulting degassed liquid adhesive is then applied as by brushing, coating or spraying, onto one surface of the optical grade plastic film, e.g., triacetate. The plastic film containing the liquid adhesive on one surface thereof is then placed in contact with the damaged surface of the transparent substrate, such as an acrylic transparency, with the liquid adhesive treated surface of the plastic film in contact with the damaged, e.g., scratched surface. Care is taken to work out all bubbles and all excess liquid adhesive, as by application of a squeegee to the plastic film.

It is practical after initially applying the liquid adhesive to the plastic film, to apply a strippable separator film such as polyethylene, polypropylene or Teflon, over the adhesive layer to protect the adhesive layer before bonding the plastic film to the transparent substrate. In this manner the plastic film with the protected adhesive layer thereon, can be transported to and/or stored at the site of use, and when ready for use, the protective separator film can be removed, as by stripping, from the plastic film, leaving the exposed adhesive layer for direct contact with the transparent substrate.

Curing of the adhesive is then carried out. When employing any of the above noted silicone, polyurethane or acrylic adhesives, curing can be accomplished at room temperature over a period of about 24 to 48 hours. If desired, however, curing can be expedited by subjecting the assembly to elevated temperature, e.g., about 125 to about 140°F.

Following curing, the scratches and sanding marks in the damaged surface of the transparent substrate are rendered invisible. This is due to the fact that the silicone, polyurethane and acrylic adhesives particularly employed herein have substantially the same

- 12 -

0192075

index of refraction, and such adhesives upon cure are transparent and have substantially the same index of refraction as the above noted plastic transparent substrates. Thus, the refractive index match between the adhesive filling the scratch and sanding marks in the damaged surface of the transparent substrate, and the substrate "washes" out or obliterates the defects.

The process of the present invention can be very rapidly carried out, for example, in a period of about 15 to about 25 minutes for application and bonding of the plastic film to the damaged surface of the substrate, and hence is particularly adapted for field repair of transparent substrates such as optically transparent windows or windshields of aircraft.

Thus, the plastic film bonded and secured to the damaged surface of the transparent substrate functions as a protective film over the area to which it is applied. By proper selection of adhesive, if such plastic film becomes damaged in service, it can be removed and the process described above repeated to replace the damaged plastic film with a fresh film. This can be carried out for example, by suitably stripping the damaged plastic film from the substrate surface, followed by sanding the damaged surface of the substrate again to remove remnants of the adhesive, and again adhesively applying another thin plastic film having the composition noted above over the damaged surface of the substrate in the manner described above.

As another feature of the present invention, the process of the invention can essentially be employed for protecting new, undamaged surfaces of plastic transparent substrates, such as those noted above, by applying a thin film of the above described plastic to such undamaged surfaces as an easily replaceable outer ply. For this purpose, the initial above described sanding step is omitted and the plastic, e.g., acrylic, film having the liquid adhesive, e.g., acrylic adhesive, applied to one surface thereof is bonded to the surface of the substrate to be protected. After a period of service, when the protective plastic film

0192075

or ply is scratched or damaged, such film can be removed and replaced with a fresh plastic film which is bonded to the transparent substrate in the manner described above.

The following are examples of practice of the invention, it being understood that such examples are only illustrative and in no sense limitative of the invention.

EXAMPLE I

The side windows on a Boeing 747 having a transparent acrylic outer layer were badly scratched on such outer acrylic surfaces. The damaged surfaces of these windows, in situ, were scuff sanded with 600 grit sandpaper, without any subsequent polishing of the transparencies.

A water clear liquid ethyl acrylate adhesive was degassed in a vacuum jar at about 29 inches mercury for 2 hours, and the resulting water clear degassed

0192075

liquid adhesive was applied to one surface of a cellulose triacetate film about 5 mils thick. The adhesive coated side of the triacetate film was then placed in contact with the damaged surfaces of the acrylic transparent windows and a squeegee was uniformly applied to the outer surface of the acrylic film to remove all bubbles in the adhesive layer and to remove all excess liquid adhesive.

The adhesive bond between the transparent windows and the triacetate film was permitted to cure for a period of about 48 hours at normal or ambient temperature. After curing, it was observed that the scratches and sanding marks in the damaged surfaces of the windows had become invisible and visibility through the windows was rendered substantially of the same clarity as the visibility through unscratched or undamaged windows of the same aircraft.

EXAMPLE II

The procedure of Example I was followed except that after the liquid adhesive was applied to the cellulose triacetate film, a strippable protective teflon film was applied to one surface of the triacetate film, and the resulting triacetate film containing the adhesive layer was stored.

When ready for use, the protective teflon film was stripped away from the adhesive layer, and the triacetate film was bonded to the damaged surfaces of the acrylic transparent windows as described in Example I.

EXAMPLE III

A cellulose triacetate film as described in Example I was adhesively bonded by means of a liquid acrylic adhesive to an undamaged optically transparent acrylic window of an aircraft, by the same procedure as described above in Example I, except that the initial sanding step was omitted.

After a period of service, and the triacetate film became scratched, the damaged protective film was stripped from the window and remaining acrylic adhesive was removed by a suitable organic solvent such as ethyl alcohol.

Thereafter, a fresh cellulose triacetate film was adhesively bonded by an acrylic adhesive to the optically transparent substrate in the manner previously described, to provide a fresh optically transparent protective film.

EXAMPLE IV

The procedure of Example I was followed for repairing the scratched surfaces of optically transparent polycarbonate windows.

However, in the present example, a liquid silicone adhesive was used for bonding the cellulose triacetate film to the polycarbonate substrates.

Substantially the same results were obtained as in Example I, that is, optially transparent polycarbonate substrates having a protective cellulose triacetate film, and wherein the scratches and defects in the polycarbonate substrate were rendered invisible.

EXAMPLE V

The procedure of Example I was substantially followed except that a thin polyester or polyvinylfluoride (Tedlar) film was bonded by means of a liquid polyurethane adhesive marketed as Adiprene L-100, to the optically transparent acrylic windows.

Substantially the same results as noted in Example I were observed, wherein the damaged surfaces of the optically transparent acrylic windows were rendered invisible, and clear visiciliby through the transparent windows was achieved, and a protective polyester or polyvinylfluoride film was provided over the damaged substrate surfaces.

Various modifications and changes in the invention concept can be practiced by those skilled in the art. Thus, it will be understood that the invention concept can be applied to an optically transparent plastic substrate other than those described above, e.g., polysulfones and butyrates such as cellulose acetate butyrate.

Further, any suitable optical grade plastic film having the proper index of refraction in addition to those described above, can be applied to an optically transparent substrate, provided that such film has sufficient toughness and durability and sufficiently good temperature resistance at substantially elevated as well as at low temperatures, particularly for use as a protective film for damaged or undamaged optically transparent windows in aircraft applications. An example of such additional plastic films can be saran (polyvinylidene chloride).

Preferably, clear liquid adhesives such as those noted above are employed. However, any suitable and compatible transparent liquid adhesives based on thermoplastic or thermosetting resins, and of suitable refractive index, in addition to those mentioned above, e.g., epoxy type adhesives, may be employed for securely bonding the thin plastic film to the optically transparent plastic substrate, and which maintain bond integrity between the substrate and the film at varying temperatures to which the plastic substrate may be subjected. Hence, the term "curing" the adhesive employed herein and in the claims is intended to denote setting of the adhesive, whether of a thermoplastic or thermosetting nature, and including removal of solvent from pressure sensitive adhesives.

From the foregoing, it is seen that the present invention provides a relatively simple and inexpensive procedure for quick repair of damaged, for example, scratched, optical transparent plastic substrates, by application of a thin film of a transparent plastic material to the damaged surface and securely bonding such film to the damaged surface by a suitable liquid resin under conditions to thereby remove the scratches or defects and provide an optically transparent substrate or window having a protective plastic film thereon, and which has substantially the same degree of visibility as the initial undamaged optical transparency. The invention further provides rapid and simple means for applying a thin protective clear optical grade plastic film to optically transparent undamaged windows or substrates to provide a protective film without impairing the visibility through the transparency, and which film when damaged can be readily replaced.

Since other various changes and modifications of the invention will occur to and can be made readily by those skilled in the art without departing from the invention concept, the invention is not to be taken as limited except by the scope of the appended claims.

WHAT IS CLAIMED IS:

1.   A method for repairing damaged surfaces of a transparent plastic substrate, which comprises

   - sanding the defects in the damaged surface of said substrate,

   - bonding a film of a transparent plastic material to the sanded surface of said substrate, by means of a clear liquid compatible adhesive, said film being an optical grade plastic selected from the group consisting of polyester, cellulose triacetate and polyvinylfluoride materials, and

   - curing said adhesive,  and wherein said film of a transparent plastic material and said cured adhesive have substantially the same index of refraction, and matching the refractive index of said substrate, whereby said defects are rendered substantially invisible.

2.   The method of claim 1, wherein said transparent plastic substrate comprises a polycarbonate or acrylic resin.

3. The method of claim 1 or 2, wherein said film has a thickness ranging from about 1 to about 10 mils.

4. The method of anyone of claims 1 to 3, wherein said clear adhesive is selected from the group consisting of silicone, polyurethane and acrylic adhesives.

5. The method of claim 2, wherein said clear adhesive is selected from the group consisting of silicone, polyurethane and acrylic adhesives.

6. The method of claim 5, said film having a thickness ranging from about 3 to about 5 mils.

7. A method for repairing scratches and the like in the surface of an optically transparent plastic substrate, which comprises
- scuff sanding the scratched surface of said substrate with fine sandpaper,
- applying a thin film of an optical grade transparent plastic material to the sanded surface of said substrate,

- bonding said film of transparent plastic
material to the surface of said transparent
substrate by means of a clear liquid compatible adhesive           said film being an
optical grade plastic selected from the
group consisting of polyester, cellulose
triacetate and polyvinylfluoride materials, and

- curing said adhesive, and wherein said film
of a transparent plastic material and said
cured adhesive have substantially the same
index of refraction, and matching the refractive index of said transparent plastic substrate, thereby rendering

said scratches substantially invisible,
and providing a transparent protective
film on said substrate.

8. The method of claim 7, including first
applying said liquid adhesive to one side of said
film of transparent plastic material and then placing the adhesive-containing side of said film over
the sanded surface of said transparent substrate.

9 . The method of claim 7, including the steps of

- applying said clear liquid adhesive to one surface of said film of transparent plastic material,
- applying a strippable separator film to said adhesive layer, and
- removing said separator film prior to bonding said film of transparent plastic material to said transparent substrate.

10. The method of claim 7, wherein said transparent plastic substrate comprises a polycarbonate or acrylic resin.

11. The method of claim 10, wherein said clear liquid adhesive is selected from the group consisting of silicone, polyurethane and acrylic adhesives.

12.  A method for providing a replaceable protective transparent film on an optically transparent plastic substrate, which comprises

- placing a thin protective film of an optical grade transparent plastic material on a surface of said transparent substrate,

  said film selected from the group consisting of polyester, cellulose triacetate and polyvinylfluoride materials,

- bonding said film of transparent plastic material to the surface of said transparent substrate by means of a clear liquid compatible adhesive and

  - curing said adhesive, to secure said plastic film to said substrate, and wherein said film of a transparent plastic material and said cured adhesive have substantially the same index of refraction, and matching the refractive index of said transparent plastic substrate.

13. The method of claim 12, and after a period of use when said protective film becomes damaged in service, removing said protective film and replacing said film with a fresh protective film by the method aforesaid.

14. The method of claim 12, wherein said transparent plastic substrate comprises a polycarbonate or acrylic resin, and said clear adhesive is selected from the group consisting of silicone, polyurethane and acrylic adhesives.

15. The method of claim 11 or 14, wherein said film has a thickness ranging from about 1 to about 10 mils.

16. The method of claim 11 or 15, wherein said plastic transparency is a window or windshield of an aircraft.